# EUROPEAN PATENT APPLICATION

(11) **EP 4 786 988 A1**
(43) Date of publication of application: **05.08.2026**
(21) Application number: 26154304.5
(22) Date of filing: 27.01.2026
(51) Int. Cl.: G01P 1/02, G01C 19/5642, G01C 19/5663, G01P 15/08, G01P 15/125, G01P 15/18, G01P 1/00

(54) **PHYSICAL QUANTITY SENSOR**

(30) Priority: 31.01.2025 JP 2025014789
(71) Applicant: Seiko Epson Corporation, Tokyo 160-8801 (JP)
(72) Inventor: TSURUSAKI, Tomohiro, Suwa-shi, Nagano 392-8502 (JP)
(74) Representative: MERH-IP Matias Erny Reichl Hoffmann Patentanwälte PartG mbB

(57) **Abstract**

A physical quantity sensor includes a package; a spacer; and a physical quantity sensor unit that is fixed to the package via the spacer, in which when a direction in which the spacer and the physical quantity sensor unit overlap is set as a first direction and a direction orthogonal to the first direction is set as a second direction, the physical quantity sensor unit includes a support substrate provided with a first anchor and a second anchor that are disposed to be separated in the second direction, a first movable portion fixed to the first anchor, and a second movable portion fixed to the second anchor, the spacer overlaps the first anchor and the second anchor in a plan view from the first direction, and when a width of the physical quantity sensor unit in the second direction is set as Wx1 and a width of the spacer in the second direction is set as Wx2, a relationship of 58% ≤ Wx2/Wx1 ≤ 88% is satisfied.

## Description

The present application is based on, and claims priority from JP Application Serial Number 2025-014789, filed January 31, 2025, the disclosure of which is hereby incorporated by reference herein in its entirety.

### BACKGROUND

### 1. Technical Field

The present disclosure relates to a physical quantity sensor.

### 2. Related Art

For example, a physical quantity sensor described in JP-A-2018-162976 includes an acceleration sensor including an acceleration sensor element and a package that accommodates the acceleration sensor element, a support member that supports the acceleration sensor on an upper surface, and an IC chip of which a lower surface is bonded to the support member. In a plan view from a stacking direction of the acceleration sensor and the support member, when an area of a region surrounded by an outer edge of the package is set as S1 and an area of the upper surface is set as S2, a relationship of S1 ≥ S2 is satisfied. According to such a configuration, a strain caused by a thermal stress due to a difference in a coefficient of thermal expansion between the support member and the substrate can be alleviated, and the strain applied to the acceleration sensor element can be reduced.

However, in JP-A-2018-162976, only a case where one acceleration sensor element is included in the acceleration sensor is considered, and a case where two or more acceleration sensor elements are included is not considered at all. Therefore, in the case where two or more acceleration sensor elements are provided, there is a concern that a strain applied to the acceleration sensor elements cannot be reduced.

### SUMMARY

According to an aspect of the present disclosure, there is provided a physical quantity sensor including: a package having an accommodation space; a spacer that is disposed in the accommodation space and is fixed to the package; and a physical quantity sensor unit that is disposed to overlap the spacer in the accommodation space and is fixed to the package via the spacer, in which when a direction in which the spacer and the physical quantity sensor unit overlap is set as a first direction and a direction orthogonal to the first direction is set as a second direction, the physical quantity sensor unit includes a support substrate including a first anchor and a second anchor that are disposed to be separated in the second direction, a first movable portion fixed to the first anchor and displaced with respect to the support substrate, and a second movable portion fixed to the second anchor and displaced with respect to the support substrate, the spacer overlaps the first anchor and the second anchor in a plan view from the first direction, and when a width of the physical quantity sensor unit in the second direction is set as Wx1 and a width of the spacer in the second direction is set as Wx2, a relationship of 58% ≤ Wx2/Wx1 ≤ 88% is satisfied.

### BRIEF DESCRIPTION OF THE DRAWINGS

FIG. 1 is a cross-sectional view of a physical quantity sensor according to a first embodiment.
FIG. 2 is a top view of the angular velocity sensor element.
FIG. 3 is a schematic view illustrating a drive state of the angular velocity sensor element.
FIG. 4 is a schematic view illustrating a drive state of the angular velocity sensor element.
FIG. 5 is a cross-sectional view of an acceleration sensor unit.
FIG. 6 is a top view of a first sensor portion.
FIG. 7 is a top view of a second sensor portion.
FIG. 8 is a top view illustrating a positional relationship between the acceleration sensor unit and a spacer.
FIG. 9 is a view for explaining a simulation.
FIG. 10 is a top view illustrating a positional relationship between the acceleration sensor unit and the spacer.
FIG. 11 is a top view illustrating a positional relationship between the acceleration sensor unit and the spacer.
FIG. 12 is a graph illustrating a simulation result.
FIG. 13 is a top view illustrating a positional relationship between the acceleration sensor unit and the spacer.
FIG. 14 is a cross-sectional view of a physical quantity sensor according to a second embodiment.
FIG. 15 is a graph illustrating a simulation result.

### DESCRIPTION OF EMBODIMENTS

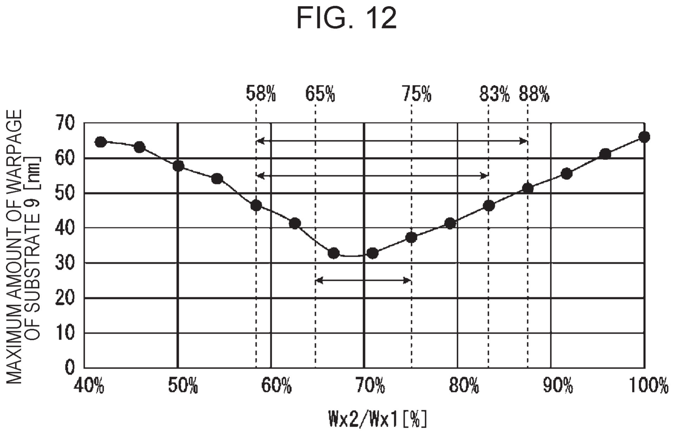

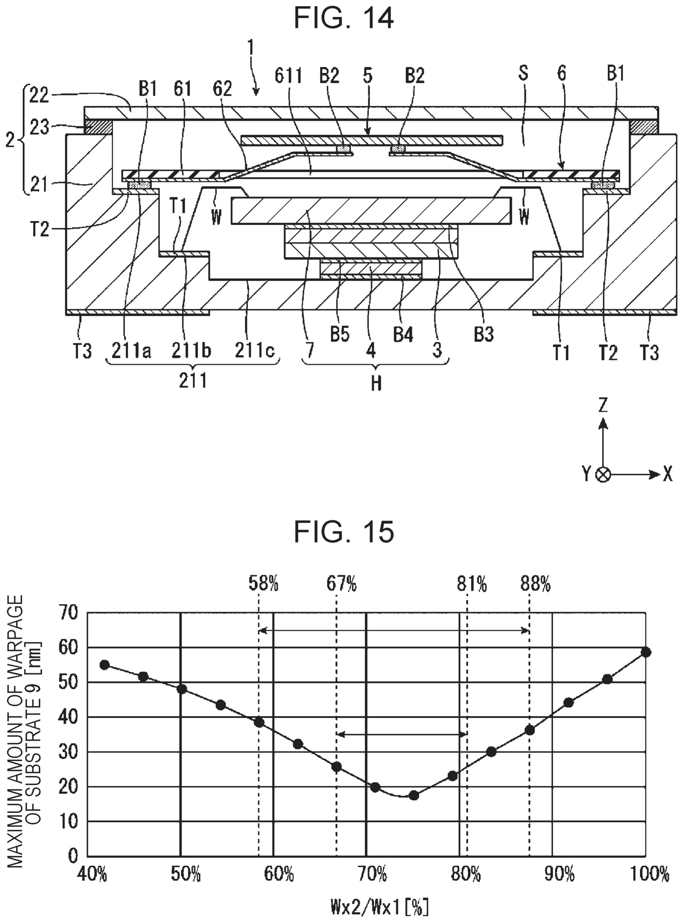

Hereinafter, a physical quantity sensor of the present disclosure will be described in detail based on embodiments illustrated in the accompanying drawings. For convenience of description, in each drawing except FIGS. 12 and 15, three axes orthogonal to each other are illustrated as an X-axis, a Y-axis, and a Z-axis. In addition, in the following description, for convenience of description, a direction along the X-axis, which is a second direction, is also referred to as an "X-axis direction", a direction along the Y-axis, which is a third direction, is also referred to as a "Y-axis direction", and a direction along the Z-axis, which is a first direction, is also referred to as a "Z-axis direction". In addition, an arrow side in the Z-axis direction is also referred to as "up", and the opposite side is also referred to as "down".

### First Embodiment

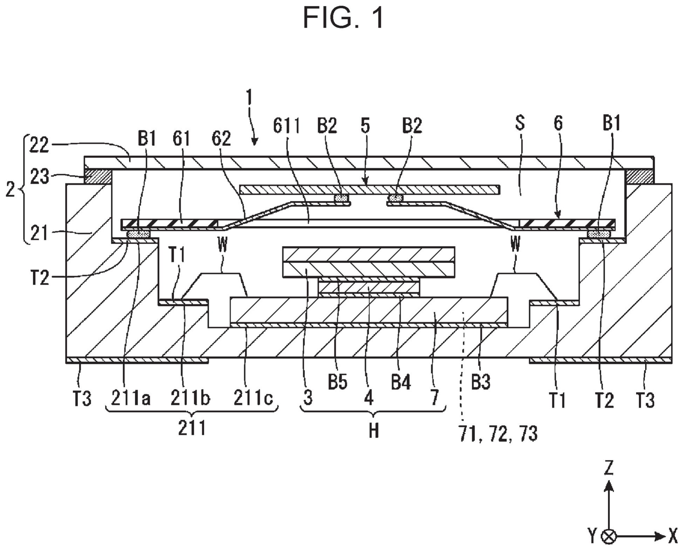

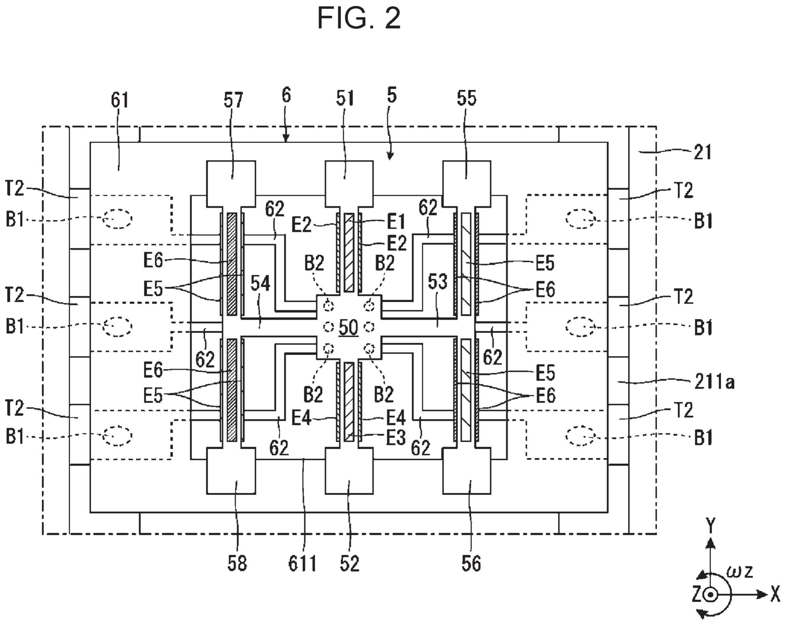

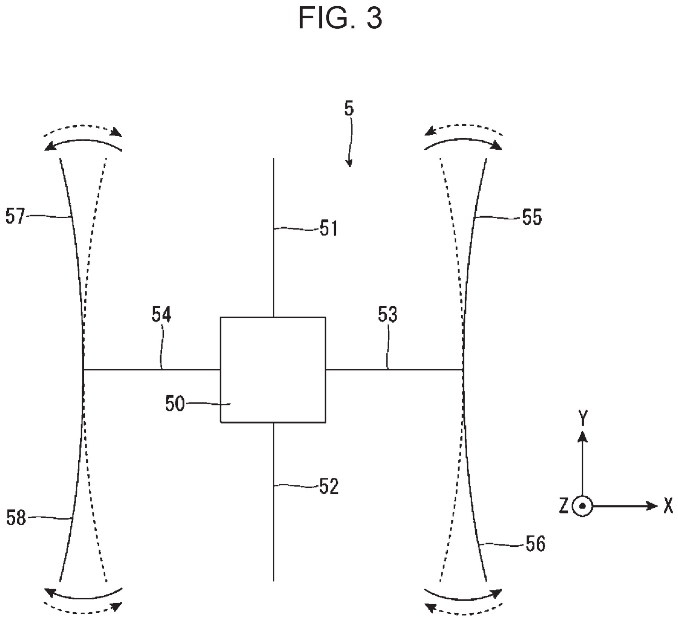

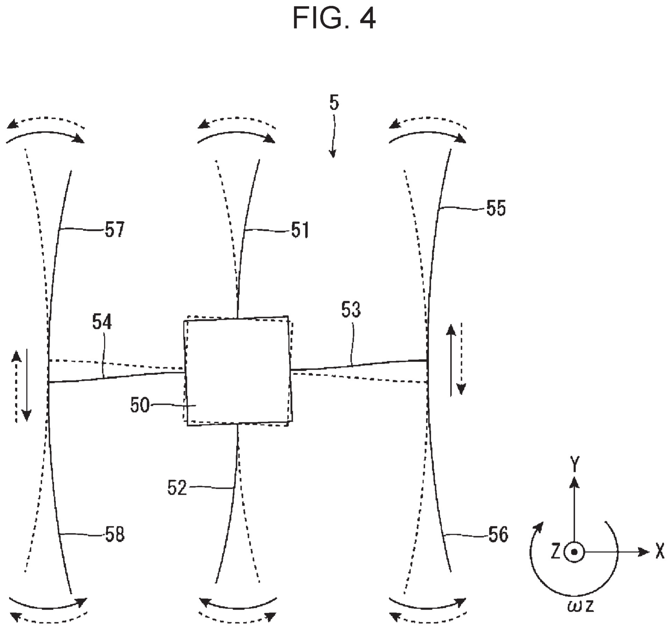

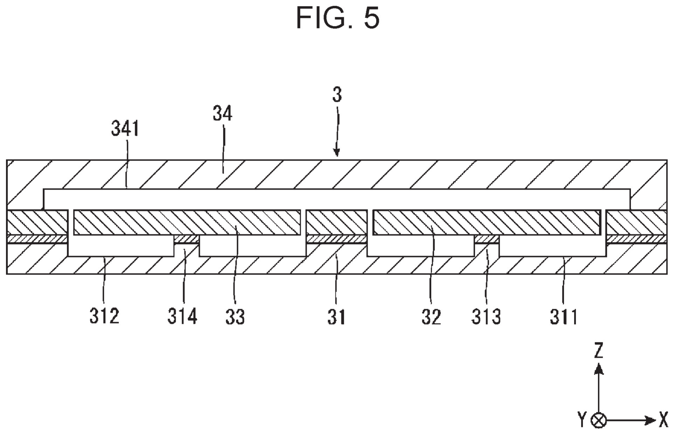

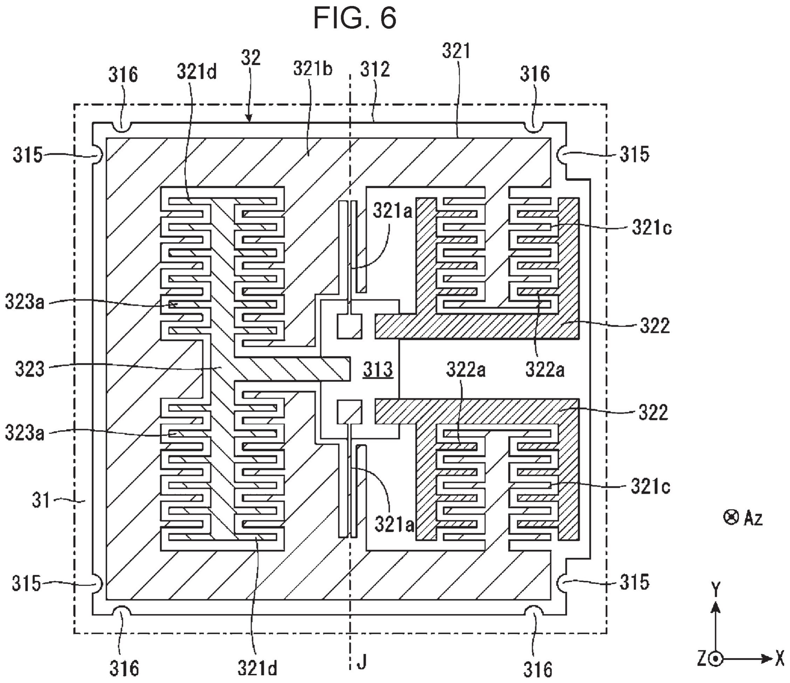

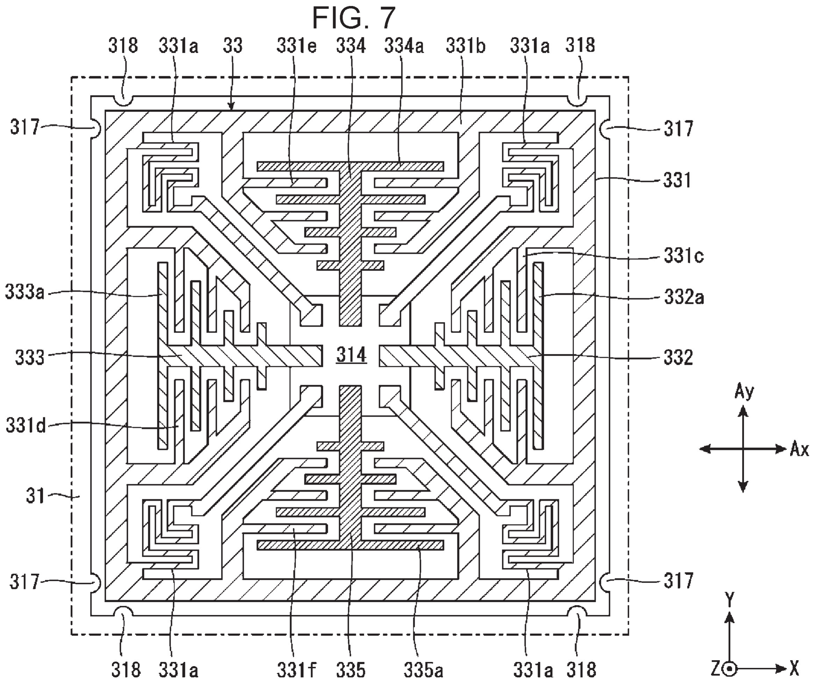

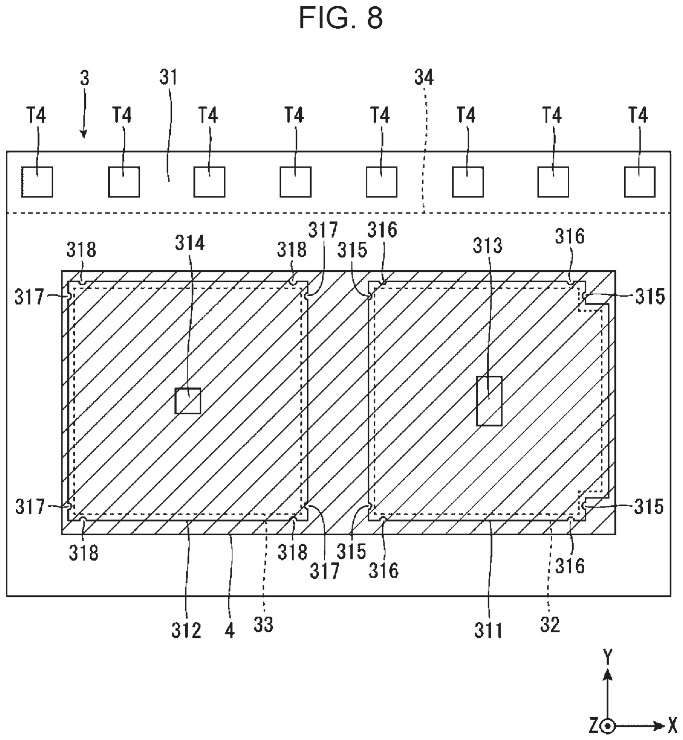

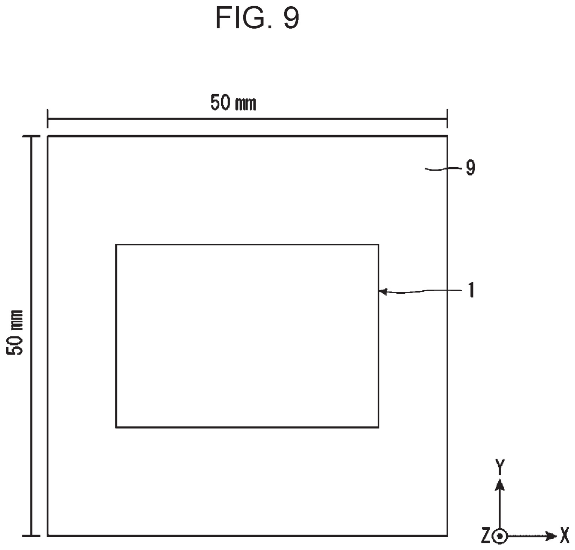

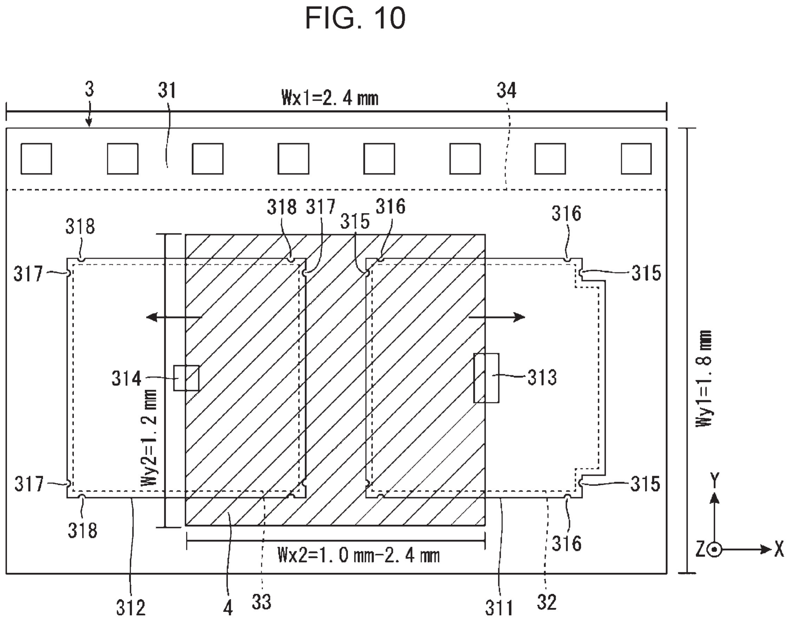

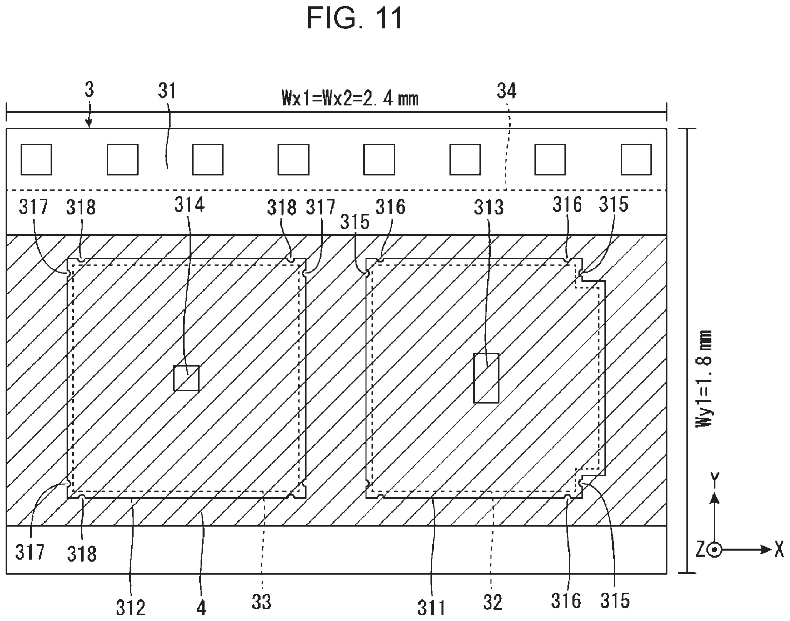

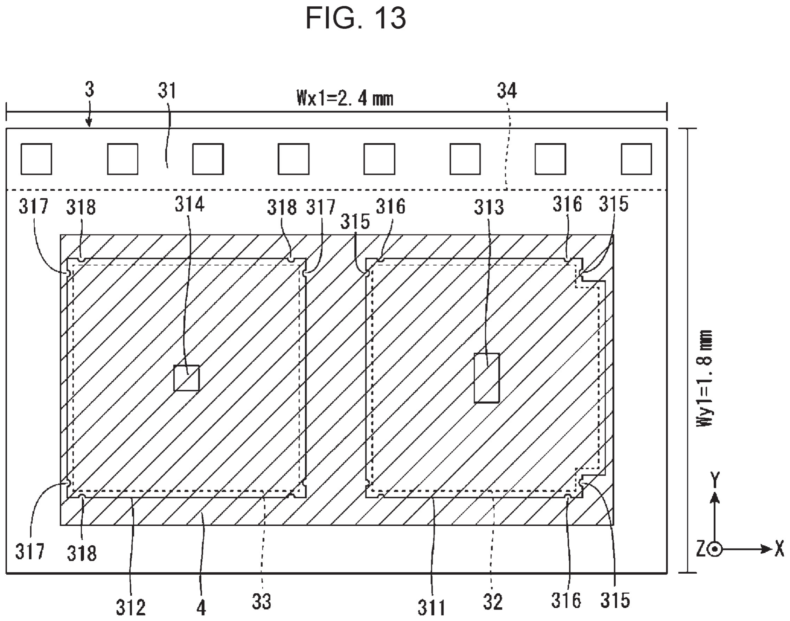

FIG. 1 is a cross-sectional view of a physical quantity sensor according to a first embodiment. FIG. 2 is a top view of an angular velocity sensor element. FIGS. 3 and 4 are schematic views illustrating drive states of the angular velocity sensor element. FIG. 5 is a cross-sectional view of an acceleration sensor unit. FIG. 6 is a top view of a first sensor portion. FIG. 7 is a top view of a second sensor portion. FIG. 8 is a top view illustrating a positional relationship between the acceleration sensor unit and a spacer. FIG. 9 is a view for explaining a simulation. FIGS. 10 and 11 are top views illustrating a positional relationship between the acceleration sensor unit and the spacer. FIG. 12 is a graph illustrating a simulation result. FIG. 13 is a top view illustrating a positional relationship between the acceleration sensor unit and the spacer.

A physical quantity sensor 1 illustrated in FIG. 1 is a composite sensor for detecting acceleration and angular velocity, and includes a package 2, an acceleration sensor unit 3 as a physical quantity sensor unit accommodated in the package 2, a spacer 4, an angular velocity sensor element 5, a support substrate 6, and a circuit element 7. Particularly, the physical quantity sensor 1 has a feature in a size of the spacer 4. Hereinafter, each of the portions will be described in order.

### Package 2

As illustrated in FIG. 1, the package 2 includes a cavity-shaped base 21 having a recessed portion 211 that is open through an upper surface, and a plate-shaped lid 22 that is bonded to an upper surface of the base 21 via a seam ring 23 and closes an opening of the recessed portion 211. An airtight accommodation space S is formed in the package 2 with the lid 22 closing the recessed portion 211, and each of the above-described portions is accommodated in the accommodation space S. The accommodation space S is airtightly sealed and is in a depressurized state, preferably in a state closer to a vacuum. As a result, viscous resistance is reduced, and vibration characteristics of the angular velocity sensor element 5 disposed in the accommodation space S in an exposed state are improved. Meanwhile, an atmosphere of the accommodation space S is not particularly limited.

A constituent material of the base 21 is not limited in particular, and for example, various ceramics such as aluminum oxide can be used. In addition, a constituent material of the lid 22 is not limited in particular but may be a member of which a coefficient of linear expansion is close to a coefficient of linear expansion of the constituent material of the base 21. For example, when the constituent material of the base 21 is ceramics, an alloy such as Kovar is preferable.

In addition, the recessed portion 211 includes a first recessed portion 211a that is open through the upper surface of the base 21, a second recessed portion 211b that is open through a bottom surface of the first recessed portion 211a and has an opening area smaller than that of the first recessed portion 211a, and a third recessed portion 211c that is open through a bottom surface of the second recessed portion 211b and has an opening area smaller than that of the second recessed portion 211b. The angular velocity sensor element 5 is disposed over the bottom surface of the first recessed portion 211a via the support substrate 6, and the circuit element 7, the spacer 4, and the acceleration sensor unit 3 are stacked and disposed on the bottom surface of the third recessed portion 211c in the Z-axis direction. Note that in the following description, a stack of the circuit element 7, the spacer 4, and the acceleration sensor unit 3 is also referred to as a "stack H".

In addition, a plurality of terminals T1 are disposed on the bottom surface of the second recessed portion 211b. Each of the terminals T1 is electrically coupled to the circuit element 7 via a conductive wire W. In addition, a plurality of terminals T2 are disposed on the bottom surface of the first recessed portion 211a. Each of the terminals T2 is electrically coupled to the angular velocity sensor element 5 via a conductive bonding member B1 and the support substrate 6. In addition, each of the terminals T2 is electrically coupled to a corresponding terminal T1 via an internal wiring (not illustrated) formed in the base 21. In addition, a plurality of external terminals T3 are disposed on a lower surface of the base 21. Each of the external terminals T3 is electrically coupled to a corresponding terminal T1 via an internal wiring (not illustrated) formed in the base 21.

### Angular Velocity Sensor Element 5

Next, the angular velocity sensor element 5 will be described. As illustrated in FIG. 1, the angular velocity sensor element 5 is disposed on an upper side of the stack H and overlaps the stack H in a plan view from the Z-axis direction. As described above, by disposing the angular velocity sensor element 5 and the stack H to overlap each other in the Z-axis direction, planar spreading of the physical quantity sensor 1 can be suppressed and a size of the physical quantity sensor 1 can be reduced. Further, since the angular velocity sensor element 5 can be disposed in a wide space positioned on the upper side of the stack H, a size of the angular velocity sensor element 5 can be easily increased, and accordingly, detection accuracy of the angular velocity sensor element 5 is improved.

The angular velocity sensor element 5 is a crystal vibration element, and can detect angular velocity ωz around the Z-axis. As illustrated in FIG. 2, the angular velocity sensor element 5 includes a crystal substrate in which a base portion 50 positioned at the central portion of the element, a pair of detection vibration arms 51 and 52 extending from the base portion 50 to both sides in the Y-axis direction, a pair of support arms 53 and 54 extending from the base portion 50 to both sides in the X-axis direction, a pair of drive vibration arms 55 and 56 extending from a tip end portion of one support arm 53 to both sides in the Y-axis direction, and a pair of drive vibration arms 57 and 58 extending from a tip end portion of the other support arm 54 to both sides in the Y-axis direction are integrally formed. The angular velocity sensor element 5 is supported by the support substrate 6 at the base portion 50.

In addition, the angular velocity sensor element 5 includes a first detection signal electrode E1 disposed on both main surfaces of the detection vibration arm 51, a first detection ground electrode E2 disposed on both side surfaces of the detection vibration arm 51, a second detection signal electrode E3 disposed on both main surfaces of the detection vibration arm 52, a second detection ground electrode E4 disposed on both side surfaces of the detection vibration arm 52, a drive signal electrode E5 disposed on both main surfaces of the drive vibration arms 55 and 56 and both side surfaces of the drive vibration arms 57 and 58, and a drive ground electrode E6 disposed on both side surfaces of the drive vibration arms 55 and 56 and both main surfaces of the drive vibration arms 57 and 58.

The angular velocity sensor element 5 as described above detects the angular velocity ωz as follows. When a drive signal is applied to the drive signal electrode E5, as illustrated in FIG. 3, the drive vibration arms 55 and 56 and the drive vibration arms 57 and 58 undergo flexural vibration in the X-axis direction in opposite phases. Hereinafter, this state is also referred to as a "drive vibration mode". In this state, the vibration of the drive vibration arms 55 and 56 and the vibration of the drive vibration arms 57 and 58 are canceled, and the detection vibration arms 51 and 52 do not vibrate. When the angular velocity ωz is applied to the angular velocity sensor element 5 in a state in which the angular velocity sensor element 5 is driven in the drive vibration mode, as illustrated in FIG. 4, a Coriolis force acts on the drive vibration arms 55, 56, 57, and 58 and the flexural vibration in the Y-axis direction is excited, and the detection vibration arms 51 and 52 undergo flexural vibration in the X-axis direction in opposite phases in response to the flexural vibration. Hereinafter, this state is also referred to as a "detection vibration mode".

A charge generated in the detection vibration arm 51 due to the detection vibration mode is taken out as a first detection signal from the first detection signal electrode E1, a charge generated in the detection vibration arm 52 due to the detection vibration mode is taken out as a second detection signal from the second detection signal electrode E3, and the angular velocity ωz is obtained based on an output signal that is a differential signal of the first and second detection signals.

Hereinbefore, the angular velocity sensor element 5 is described, but the disposition and configuration of the angular velocity sensor element 5 are not particularly limited. In addition, the angular velocity sensor element 5 may be omitted.

### Support Substrate 6

The support substrate 6 has a function of supporting the angular velocity sensor element 5 and electrically coupling the angular velocity sensor element 5 to the terminal T2 on the base 21. As described above, by interposing the support substrate 6 between the base 21 and the angular velocity sensor element 5, a thermal stress is less likely to be applied to the angular velocity sensor element 5, and detection accuracy of the angular velocity sensor element 5 is improved.

The support substrate 6 is a substrate for tape automated bonding (TAB) mounting, and supports the angular velocity sensor element 5 to lift the angular velocity sensor element 5 from a lower side. As illustrated in FIG. 2, the support substrate 6 includes a substrate 61 and six leads 62 provided in the substrate 61. In addition, the substrate 61 has a frame shape in a plan view from the Z-axis direction, and has an opening portion 611 on an inner side. The substrate 61 consists of a film formed of an insulating resin such as polyimide. However, the constituent material of the substrate 61 is not particularly limited, and for example, can be formed of an insulating resin other than polyimide. The substrate 61 is fixed to the bottom surface of the first recessed portion 211a by the bonding member B1 at both end portions in the Y-axis direction. Furthermore, each of the leads 62 is electrically coupled to the terminal T2 formed at the bottom surface of the first recessed portion 211a via the bonding member B1.

The six leads 62 are bonding leads that support the angular velocity sensor element 5, and are wiring patterns having conductivity. In the present embodiment, each of the leads 62 is formed of metal foil such as copper foil. As a result, the lead 62 can be easily formed. Each of the leads 62 is bent in the Z-axis direction in the middle and inclined upward, and a tip end portion is positioned above the substrate 61 through the opening portion 611. The base portion 50 of the angular velocity sensor element 5 is fixed to the tip end portion of each of the leads 62 via the bonding member B2. Although not illustrated, each of the leads 62 is electrically coupled to corresponding electrodes E1 to E6 via the bonding member B2. Acceleration Sensor Unit 3

The acceleration sensor unit 3 is a three-axis acceleration sensor unit that can independently detect acceleration Ax in the X-axis direction, acceleration Ay in the Y-axis direction, and acceleration Az in the Z-axis direction. According to such a configuration, the physical quantity sensor 1 has a larger number of detection axes, and thus convenience thereof is increased. In addition, the acceleration sensor unit 3 is silicon micro electro mechanical systems (MEMS). According to such a configuration, the size of the acceleration sensor unit 3 can be reduced.

As illustrated in FIG. 5, the acceleration sensor unit 3 includes a support substrate 31, a first sensor portion 32 and a second sensor portion 33 supported by the support substrate 31, and a lid 34 that is bonded to the support substrate 31 and accommodates the first and second sensor portions 32 and 33 between the lid 34 and the support substrate 31. Among these, the support substrate 31 and the first and second sensor portions 32 and 33 are integrally formed from, for example, a silicon on insulator (SOI) substrate. Specifically, the support substrate 31 is formed from the entire SOI substrate, and the first and second sensor portions 32 and 33 are formed from an upper silicon layer (device layer). In addition, the lid 34 is formed from a silicon substrate, and a lower surface of the lid 34 is bonded to an upper surface of the support substrate 31 via a bonding member (not illustrated). According to such a configuration, the acceleration sensor unit 3 can be easily and accurately manufactured by a manufacturing method conforming to a silicon semiconductor process.

The support substrate 31 has a first recessed portion 311 and a second recessed portion 312 that are open through the upper surface. The first and second recessed portions 311 and 312 are disposed to be aligned in the X-axis direction. The first recessed portion 311 is disposed to overlap the first sensor portion 32 in a plan view from the Z-axis direction, and functions as an escape portion for avoiding contact with the first sensor portion 32. On the other hand, the second recessed portion 312 is disposed to overlap the second sensor portion 33 in a plan view from the Z-axis direction, and functions as an escape portion for avoiding contact with the second sensor portion 33. Further, the support substrate 31 has a first columnar anchor 313 erected at the central portion of a bottom surface of the first recessed portion 311 and a second columnar anchor 314 erected at the central portion of a bottom surface of the second recessed portion 312. The first sensor portion 32 is fixed to an upper surface of the first anchor 313, and the second sensor portion 33 is fixed to an upper surface of the second anchor 314.

The first sensor portion 32 is a sensor portion that detects the acceleration Az in the Z-axis direction. As illustrated in FIG. 6, the first sensor portion 32 includes a movable portion 321 that is a first movable portion and has comb-like electrodes include multiple electrode fingers, a first fixed body 322 has comb-like electrodes include multiple electrode fingers, and a second fixed body 323 has comb-like electrodes include multiple electrode fingers. Each of the movable portion 321, the first fixed body 322, and the second fixed body 323 is fixed to the upper surface of the first anchor 313. In FIG. 6, hatching is provided to clearly illustrate each portion, but this does not represent a cross-section.

In addition, the first fixed body 322 includes a first fixed comb-like electrodes 322a positioned on a positive side in the X-axis direction with respect to the first anchor 313. On the other hand, the second fixed body 323 includes a second fixed comb-like electrodes 323a positioned on a negative side in the X-axis direction with respect to the first anchor 313.

In addition, the movable portion 321 includes a spring portion 321a extending from the first anchor 313 to both sides in the Y-axis direction, and a movable plate 321b supported by the first anchor 313 via the spring portion 321a and swinging around a swing axis J along the Y-axis according to an elastic deformation of the spring portion 321a with respect to the support substrate 31. Further, the movable plate 321b includes a first movable comb-like electrodes 321c that meshes with the first fixed comb-like electrodes 322a include multiple electrode fingers and a second movable comb-like electrodes 321d include multiple electrode fingers that meshes with the second fixed comb-like electrodes 323a include multiple electrode fingers. Further, the movable plate 321b is asymmetric with respect to the swing axis J, and a mass of a portion on the negative side in the X-axis direction with respect to the swing axis J is larger than a mass of a portion on the positive side in the X-axis direction.

In the first sensor portion 32 having such a configuration, a first capacitance is formed between the first fixed comb-like electrodes 322a and the first movable comb-like electrodes 321c, and a second capacitance is formed between the second fixed comb-like electrodes 323a and the second movable comb-like electrodes 321d. When the acceleration Az in the Z-axis direction is applied, the movable plate 321b swings around the swing axis J while elastically deforming the spring portion 321a in correspondence with a magnitude and a direction of the applied acceleration Az, and the first and second capacitances change in combination with this swing. Therefore, the applied acceleration Az can be detected based on the change in the first and second capacitances.

In the first sensor portion 32, the first anchor 313 is positioned at the central portion of the movable portion 321 in a plan view from the Z-axis direction. According to such a configuration, for example, a size of the first sensor portion 32 can be further reduced as compared with a configuration in which the first anchor 313 is positioned around the movable portion 321.

The support substrate 31 includes a first stopper 315 that is positioned around the movable portion 321 and comes into contact with the movable plate 321b to restrict a further displacement of the movable portion 321 in the X-axis direction. When the movable portion 321 is displaced in the X-axis direction, the first stopper 315 manages a gap with the movable plate 321b to come into contact with the movable plate 321b before the first and second fixed comb-like electrodes 322a and 323a and the first and second movable comb-like electrodes 321c and 321d come into contact with each other. According to such a configuration, it is possible to effectively suppress damage, sticking, and the like due to the contact between the first and second fixed comb-like electrodes 322a and 323a and the first and second movable comb-like electrodes 321c and 321d.

In addition, the support substrate 31 includes a second stopper 316 that is positioned around the movable portion 321 and comes into contact with the movable plate 321b to restrict a further displacement of the movable portion 321 in the Y-axis direction. When the movable portion 321 is displaced in the Y-axis direction, the second stopper 316 manages a gap with the movable plate 321b to come into contact with the movable plate 321b before the first and second fixed comb-like electrodes 322a and 323a and the first and second movable comb-like electrodes 321c and 321d come into contact with each other. According to such a configuration, it is possible to effectively suppress damage, sticking, and the like due to the contact between the first and second fixed comb-like electrodes 322a and 323a and the first and second movable comb-like electrodes 321c and 321d.

The second sensor portion 33 is a sensor portion that detects the acceleration Ax in the X-axis direction and the acceleration Ay in the Y-axis direction independently of each other. As illustrated in FIG. 7, the second sensor portion 33 includes a movable portion 331 that is a second movable portion and has comb-like electrodes include multiple electrode fingers, a first fixed body 332, a second fixed body 333, a third fixed body 334, and a fourth fixed body 335. Each of the movable portion 331, the first fixed body 332, the second fixed body 333, the third fixed body 334, and the fourth fixed body 335 is fixed to the upper surface of the second anchor 314. In FIG. 7, each portion is provided with hatching for easy understanding, but this does not represent a cross-section.

In addition, the first fixed body 332 includes a first fixed comb-like electrodes 332a include multiple electrode fingers positioned on a positive side in the X-axis direction with respect to the second anchor 314. The second fixed body 333 includes a second fixed comb-like electrodes 333a include multiple electrode fingers positioned on a negative side in the X-axis direction with respect to the second anchor 314. The first and second fixed bodies 332 and 333 are arranged symmetrically with respect to the second anchor 314.

In addition, the third fixed body 334 includes a third fixed comb-like electrodes 334a include multiple electrode fingers positioned on a positive side in the Y-axis direction with respect to the second anchor 314. Further, the fourth fixed body 335 includes a fourth fixed comb-like electrodes 335a include multiple electrode fingers positioned on a negative side in the Y-axis direction with respect to the second anchor 314. The third and fourth fixed bodies 334 and 335 are disposed symmetrically with respect to the second anchor 314.

In addition, the movable portion 331 includes four spring portions 331a that radially extend from the second anchor 314, and a frame-shaped movable plate 331b that is supported by the second anchor 314 via the spring portions 331a and is displaced in the X-axis direction and the Y-axis direction with respect to the support substrate 31 by an elastic deformation of the spring portions 331a. In addition, the movable plate 331b includes a first movable comb-like electrodes 331c include multiple electrode fingers that meshes with the first fixed comb-like electrodes 332a include multiple electrode fingers, a second movable comb-like electrodes 331d that meshes with the second fixed comb-like electrodes 333a, a third movable comb-like electrodes 331e that meshes with the third fixed comb-like electrodes 334a, and a fourth movable comb-like electrodes 331f include multiple electrode fingers that meshes with the fourth fixed comb-like electrodes 335a.

In the second sensor portion 33 having such a configuration, a first capacitance is formed between the first fixed comb-like electrodes 332a and the first movable comb-like electrodes 331c, a second capacitance is formed between the second fixed comb-like electrodes 333a and the second movable comb-like electrodes 331d, a third capacitance is formed between the third fixed comb-like electrodes 334a and the third movable comb-like electrodes 331e, and a fourth capacitance is formed between the fourth fixed comb-like electrodes 335a and the fourth movable comb-like electrodes 331f. When the acceleration Ax in the X-axis direction is applied, the movable plate 331b is displaced in the X-axis direction while elastically deforming the spring portions 331a in correspondence with a magnitude and a direction of the applied acceleration Ax, and the first and second capacitances change in conjunction with the displacement. At this time, the third and fourth capacitances do not substantially change. Therefore, the applied acceleration Ax can be detected based on the change in the first and second capacitances. On the other hand, when the acceleration Ay in the Y-axis direction is applied, the movable plate 331b is displaced in the Y-axis direction while elastically deforming the spring portions 331a in correspondence with a magnitude and a direction of the applied acceleration Ay, and the third and fourth capacitances change in conjunction with the displacement. At this time, the first and second capacitances do not substantially change. Therefore, the applied acceleration Ay can be detected based on the change in the third and fourth capacitances.

In the second sensor portion 33, the second anchor 314 is positioned at the central portion of the movable portion 331 in a plan view from the Z-axis direction. According to such a configuration, for example, the size of the second sensor portion 33 can be further reduced as compared with a configuration in which the second anchor 314 is positioned around the movable portion 331.

The support substrate 31 includes a first stopper 317 that is positioned around the movable portion 331 and comes into contact with the movable plate 331b to restrict a further displacement of the movable portion 331 in the X-axis direction. When the movable portion 331 is displaced in the X-axis direction, the first stopper 317 manages a gap with the movable plate 331b to come into contact with the movable plate 331b before the first and second fixed comb-like electrodes 332a and 333a and the first and second movable comb-like electrodes 331c and 331d come into contact with each other. According to such a configuration, it is possible to effectively suppress damage, sticking, and the like due to the contact between the first and second fixed comb-like electrodes 332a and 333a and the first and second movable comb-like electrodes 331c and 331d.

The support substrate 31 includes a second stopper 318 that is positioned around the movable portion 331 and comes into contact with the movable plate 331b to restrict a further displacement of the movable portion 331 in the Y-axis direction. When the movable portion 331 is displaced in the Y-axis direction, the second stopper 318 manages a gap with the movable plate 331b to come into contact with the movable plate 331b before the third and fourth fixed comb-like electrodes 334a and 335a and the third and fourth movable comb-like electrodes 331e and 331f come into contact with each other. According to such a configuration, it is possible to effectively suppress damage, sticking, and the like due to the contact between the third and fourth fixed comb-like electrodes 334a and 335a and the third and fourth movable comb-like electrodes 331e and 331f.

As illustrated in FIG. 5, the lid 34 has a recessed portion 341 that is open through the lower surface. The first and second sensor portions 32 and 33 are accommodated in the recessed portion 341 and are bonded to the upper surface of the support substrate 31.

Here, as illustrated in FIG. 8, the support substrate 31 is larger than the lid 34, and a part of the upper surface protrudes from the lid 34. A plurality of terminals T4 electrically coupled to the first and second sensor portions 32 and 33 are disposed in the protruding portion. Although not illustrated, each of the terminals T4 is electrically coupled to the circuit element 7 via the conductive wire W.

Hereinbefore, the acceleration sensor unit 3 is described. However, the configuration of the acceleration sensor unit 3 is not particularly limited as long as the acceleration sensor unit 3 includes two sensor portions. For example, the second sensor portion 33 may be configured to detect only one of the accelerations Ax and Ay. In addition, for example, the first and second sensor portions 32 and 33 may have the same configuration as each other, such as both detecting the acceleration Az. Further, for example, the sensor may have three sensor portions, that is, a sensor portion that detects the acceleration Ax, a sensor portion that detects the acceleration Ay, and a sensor portion that detects the acceleration Az. In addition, in the first sensor portion 32, the first and second stoppers 315 and 316 may be omitted, and the first and second stoppers 315 and 316 may be disposed in the movable plate 321b. Similarly, in the second sensor portion 33, the first and second stoppers 317 and 318 may be omitted, or the first and second stoppers 317 and 318 may be disposed in the movable plate 331b.

### Circuit Element 7

As illustrated in FIG. 1, the circuit element 7 is bonded and fixed to the bottom surface of the third recessed portion 211c via a bonding member B3. As described above, by fixing the circuit element 7 to the bottom surface of the third recessed portion 211c, for example, as in the second embodiment described later, the circuit element 7 can be fixed to the package 2 in a more stable state as compared with the configuration in which the circuit element 7 is fixed to the acceleration sensor unit 3. In addition, the size of the circuit element 7 can be easily increased, and accordingly, characteristics of the circuit can be improved or various functions can be easily added. The bonding member B3 is not particularly limited, but in the present embodiment, a die attach film (DAF) is used.

In addition, the circuit element 7 is electrically coupled to the acceleration sensor unit 3 and the angular velocity sensor element 5 via the base 21, and signals from the acceleration sensor unit 3 and the angular velocity sensor element 5 are input to the circuit element 7. The circuit element 7 is, for example, a micro controller unit (MCU), and collectively controls each portion of the physical quantity sensor 1. Such a circuit element 7 includes a first control circuit portion 71 that controls the drive of the acceleration sensor unit 3 and detects the acceleration Ax, Ay, and Az based on the signal input from the acceleration sensor unit 3, a second control circuit portion 72 that controls the drive of the angular velocity sensor element 5 and detects the angular velocity ωz based on the signal input from the angular velocity sensor element 5, and an interface circuit portion 73 that performs communication with an external device.

### Spacer 4

As illustrated in FIG. 1, the spacer 4 is positioned between the circuit element 7 and the acceleration sensor unit 3, and is bonded and fixed to an upper surface of the circuit element 7 via the bonding member B4 on a lower surface of the spacer 4, and is bonded and fixed to a lower surface of the acceleration sensor unit 3 via a bonding member B5 on an upper surface of the spacer 4. That is, the acceleration sensor unit 3 is fixed to the base 21 of the package 2 via the spacer 4 and the circuit element 7. The bonding member B4 is not particularly limited, but in the present embodiment, a die attach film (DAF) is used. In addition, the bonding member B5 is not particularly limited, but in the present embodiment, Ag (silver) paste is used. In particular, the bonding member B5 is applied only to a portion that overlaps the spacer 4 in the lower surface of the acceleration sensor unit 3. As a result, it is difficult for a thermal stress caused by the difference in the coefficient of linear expansion between the acceleration sensor unit 3 and the bonding member B5 to occur, and a deterioration of detection characteristics of the acceleration sensor unit 3 can be effectively suppressed.

In addition, the spacer 4 is formed of silicon. As described above, by forming the spacer 4 with silicon, the spacer 4 and the acceleration sensor unit 3 can be formed from the same constituent material, and the coefficients of linear expansion of these materials become equal. Therefore, it is difficult for the thermal stress to occur in the acceleration sensor unit 3, and the deterioration of the detection characteristics of the acceleration sensor unit 3 can be effectively suppressed. However, the constituent material of the spacer 4 is not particularly limited, and may be any material such as a glass material, a resin material, or a metal material.

As illustrated in FIG. 8, the spacer 4 has a smaller area as compared with the acceleration sensor unit 3 in a plan view from the Z-axis direction. Specifically, in a plan view from the Z-axis direction, the entire region of the spacer 4 is included in the acceleration sensor unit 3, and a length in the X-axis direction and a length in the Y-axis direction are smaller than those of the acceleration sensor unit 3. Further, the length in the Y-axis direction is longer than lengths of the first and second sensor portions 32 and 33 included in the acceleration sensor unit 3 in the Y-axis direction, and both end portions of the spacer 4 in the Y-axis direction protrude from the first and second sensor portions 32 and 33 on both sides in the Y-axis direction.

In addition, the spacer 4 overlaps the first anchor 313 and the second anchor 314 included in the acceleration sensor unit 3 in a plan view from the Z-axis direction. When a width of the acceleration sensor unit 3 in the X-axis direction is set as Wx1 and a width of the spacer 4 in the X-axis direction is set as Wx2, Wx1 and Wx2 satisfy a relationship of 58% ≤ Wx2 / Wx1 ≤ 88%. With such a configuration, it is difficult for thermal stress to occur in the acceleration sensor unit 3, and the deterioration of the detection characteristics of the acceleration sensor unit 3 can be effectively suppressed. Hereinafter, this relationship will be described based on a simulation result.

As illustrated in FIG. 9, in a simulation, the physical quantity sensor 1 is mounted at the central portion of the substrate 9 of 50 mm square, and the maximum amount of warpage of four sides of the substrate 9 when the substrate 9 is heated from 25°C to 110°C is measured. It is assumed that the substrate 9 is a printed circuit board on which the physical quantity sensor 1 is mounted. In addition, as illustrated in FIG. 10, in the physical quantity sensor 1, the size of the acceleration sensor unit 3 is fixed to (the width Wx1 in the X-axis direction) × (the width Wy1 in the Y-axis direction) = 2.4 mm × 1.8 mm, and the size of the spacer 4 is fixed to (the width Wy2 in the Y-axis direction) = 1.2 mm. Then, the width Wx2 of the spacer 4 in the X-axis direction is changed from 1.0 mm to 2.4 mm at intervals of 0.1 mm, and the maximum amount of warpage is measured for each size. FIG. 10 illustrates a case where the width Wx2 = 1.0 mm, and the spacer 4 overlaps the first and second anchors 313 and 314 in a plan view from the Z-axis direction. Then, from this state, as illustrated in FIG. 11, the width Wx2 is increased by 0.1 mm on both sides in the X-axis direction until the width Wx1 is equal to the width Wx2. FIG. 12 shows the results. It should be noted that the larger the warpage of the substrate 9, the larger the thermal stress applied to the acceleration sensor unit 3 when the physical quantity sensor 1 is mounted on an object.

As illustrated in FIG. 12, the warpage of the substrate 9 is suppressed to approximately 50 nm in a range of 58% ≤ Wx2/Wx1 ≤ 88%. Therefore, according to the range, the warpage of the substrate 9 can be effectively reduced. Furthermore, the warpage of the substrate 9 is more effectively reduced in a range of 58% ≤ Wx2/Wx1 ≤ 83%, and is further effectively reduced in the range of 65% ≤ Wx2/Wx1 ≤ 75%. Therefore, according to the above range, the thermal stress applied to the acceleration sensor unit 3 can be suppressed to be small, and the deterioration of the detection characteristics of the acceleration sensor unit 3 can be effectively suppressed.

Here, at 70% at which the warpage of the substrate 9 is most suppressed, as shown in FIG. 13, the spacer 4 overlaps all of the first and second stoppers 315, 316, 317, and 318 in a plan view from the Z-axis direction. Therefore, in a plan view from the Z-axis direction, since the spacer 4 overlaps all of the first and second stoppers 315, 316, 317, and 318, the deterioration of the detection characteristics of the acceleration sensor unit 3 can be more effectively suppressed.

Hereinbefore, the physical quantity sensor 1 is described. As described above, the physical quantity sensor 1 includes the package 2 having the accommodation space S, the spacer 4 disposed in the accommodation space S and fixed to the package 2, and the acceleration sensor unit 3 as a physical quantity sensor unit disposed to overlap the spacer 4 in the accommodation space S and fixed to the package 2 via the spacer 4. In addition, when a direction in which the spacer 4 and the acceleration sensor unit 3 overlap each other is set as the Z-axis direction as a first direction, and a direction orthogonal to the Z-axis direction is set as the X-axis direction as a second direction, the acceleration sensor unit 3 includes the support substrate 31 including the first anchor 313 and the second anchor 314 that are arranged to be separated from each other in the X-axis direction, the movable portion 321 fixed to the first anchor 313 and serving as a first movable portion that is displaced with respect to the support substrate 31, and the movable portion 331 fixed to the second anchor 314 and serving as a second movable portion that is displaced with respect to the support substrate 31. In a plan view from the Z-axis direction, the spacer 4 overlaps the first anchor 313 and the second anchor 314, and when the width of the acceleration sensor unit 3 in the X-axis direction is set as Wx1 and the width of the spacer 4 in the X-axis direction is set as Wx2, a relationship of 58% ≤ Wx2/Wx1 ≤ 88% is satisfied. With such a configuration, it is difficult for thermal stress to occur in the acceleration sensor unit 3, and the deterioration of the detection characteristics of the acceleration sensor unit 3 can be effectively suppressed.

Further, as described above, in a plan view from the Z-axis direction, the first anchor 313 is positioned at the central portion of the movable portion 321. According to such a configuration, for example, a size of the first sensor portion 32 can be further reduced as compared with a configuration in which the first anchor 313 is positioned around the movable portion 321. Further, the second anchor 314 is positioned at the central portion of the movable portion 331. According to such a configuration, for example, the size of the second sensor portion 33 can be further reduced as compared with a configuration in which the second anchor 314 is positioned around the movable portion 331.

Further, as described above, the circuit element 7, which is disposed in the accommodation space S and to which a signal from the acceleration sensor unit 3 is input, is provided. The circuit element 7 is disposed between the package 2 and the spacer 4, and the spacer 4 is fixed to the package 2 via the circuit element 7. According to such a configuration, for example, as in the second embodiment described later, the circuit element 7 can be fixed to the package 2 in a more stable state as compared with a configuration in which the circuit element 7 is fixed to the acceleration sensor unit 3.

In addition, as described above, in the physical quantity sensor 1, it is more preferable to satisfy a relationship of 58% ≤ Wx2/Wx1 ≤ 83%. With such a configuration, it is more difficult for thermal stress to occur in the acceleration sensor unit 3, and the deterioration of the detection characteristics of the acceleration sensor unit 3 can be more effectively suppressed.

In addition, as described above, in the physical quantity sensor 1, it is more preferable to satisfy a relationship of 65% ≤ Wx2/Wx1 ≤ 75%. With such a configuration, it is more difficult for thermal stress to occur in the acceleration sensor unit 3, and the deterioration of the detection characteristics of the acceleration sensor unit 3 can be more effectively suppressed.

In addition, as described above, when a direction, which is orthogonal to the Z-axis direction and the X-axis direction, is set as the Y-axis direction as a third direction, the acceleration sensor unit 3 is a three-axis acceleration sensor unit that can detect the acceleration Az in the Z-axis direction based on a displacement of the movable portion 321 with respect to the support substrate 31, and can detect the accelerations Ax and Ay in the X-axis direction and the Y-axis direction based on a displacement of the movable portion 331 with respect to the support substrate 31. According to such a configuration, the physical quantity sensor 1 is a physical quantity sensor with high convenience because the acceleration sensor unit 3 can detect the three-axis accelerations Ax, Ay, and Az that are orthogonal to each other. Further, since the movable portion 331 has two detection axes, the size of the acceleration sensor unit 3 can be reduced.

In addition, as described above, the physical quantity sensor 1 includes the angular velocity sensor element 5 that is disposed in the accommodation space S and detects the angular velocity ωz around the Z-axis. According to such a configuration, the physical quantity sensor 1 is a physical quantity sensor with high convenience because the angular velocity ωz can be detected in addition to the accelerations Ax, Ay, and Az.

### Second Embodiment

FIG. 14 is a cross-sectional view of a physical quantity sensor according to a second embodiment. FIG. 15 is a graph illustrating a simulation result.

In the present embodiment, a configuration is the same as that of the physical quantity sensor 1 of the first embodiment described above except that the disposition of the circuit element 7 is different. In the following description, the present embodiment will be described with focus given to a difference from the embodiment described above, and description of the same matters will not be repeated. In addition, in the drawing of the present embodiment, the same reference numerals are assigned to the same configurations as in the embodiment described above.

As illustrated in FIG. 14, in the physical quantity sensor 1 of the present embodiment, the circuit element 7 is positioned opposite to the spacer 4 with respect to the acceleration sensor unit 3. The circuit element 7 is fixed to the upper surface of the acceleration sensor unit 3. Therefore, in the physical quantity sensor 1 of the present embodiment, the spacer 4 is positioned on a lower end side of the stack H, and is bonded and fixed to the base 21 via the bonding member B4. According to such a configuration, for example, as compared with the first embodiment described above, a larger area for disposing the acceleration sensor unit 3 can be secured, and a larger acceleration sensor unit 3 can be mounted. Therefore, for example, the capacitance formed in the first and second sensor portions 32 and 33 can be increased as compared with the first embodiment described above, and the accelerations Ax, Ay, and Az can be detected with higher accuracy.

In the physical quantity sensor 1 having such a configuration, the width Wx1 of the acceleration sensor unit 3 and the width Wx2 of the spacer 4 satisfy a relationship of 58% ≤ Wx2/Wx1 ≤ 88%. With such a configuration, it is difficult for thermal stress to occur in the acceleration sensor unit 3, and the deterioration of the detection characteristics of the acceleration sensor unit 3 can be effectively suppressed. Hereinafter, this relationship will be described based on a simulation result.

The same simulation as in the first embodiment described above is performed, and the result is illustrated in FIG. 15. As illustrated in FIG. 15, the warpage of the substrate 9 is suppressed to approximately 40 nm in a range of 58% ≤ Wx2/Wx1 ≤ 88%. Therefore, according to the range, the warpage of the substrate 9 can be effectively reduced. Furthermore, the warpage of the substrate 9 is more effectively reduced in a range of 67% ≤ Wx2/Wx1 ≤ 81%. Therefore, according to the above range, the thermal stress applied to the acceleration sensor unit 3 can be suppressed to be small, and the deterioration of the detection characteristics of the acceleration sensor unit 3 can be effectively suppressed.

Here, in a case of 75% in which the warpage of the substrate 9 is most suppressed, as in FIG. 13 described above, the spacer 4 overlaps all of the first and second stoppers 315, 316, 317, and 318 in a plan view from the Z-axis direction. Therefore, in a plan view from the Z-axis direction, since the spacer 4 overlaps all of the first and second stoppers 315, 316, 317, and 318, the deterioration of the detection characteristics of the acceleration sensor unit 3 can be more effectively suppressed.

As described above, the physical quantity sensor 1 of the present embodiment includes the circuit element 7 which is disposed in the accommodation space S and to which a signal from the acceleration sensor unit 3 is input, and the circuit element 7 is positioned opposite to the spacer 4 with respect to the acceleration sensor unit 3 and is fixed to the acceleration sensor unit 3. According to such a configuration, for example, as compared with the first embodiment described above, a larger area for disposing the acceleration sensor unit 3 can be secured, and a larger acceleration sensor unit 3 can be mounted. Therefore, for example, the capacitance formed in the first and second sensor portions 32 and 33 can be increased as compared with the first embodiment described above, and the accelerations Ax, Ay, and Az can be detected with higher accuracy.

Further, as described above, the physical quantity sensor 1 satisfies a relationship of 67% ≤ Wx2/Wx1 ≤ 81%. With such a configuration, it is difficult for the thermal stress to be transmitted to the acceleration sensor unit 3, and the deterioration of the detection characteristics of the acceleration sensor unit 3 can be effectively suppressed.

Hereinbefore, the physical quantity sensor of the present disclosure is described based on the illustrated embodiments, but the present disclosure is not limited thereto, and the configuration of each portion can be replaced with any configuration having the same function. In addition, any other configuration may be added to the present disclosure. In addition, each embodiment and a modification example may be appropriately combined.

## Claims

1. A physical quantity sensor comprising:
a package;
a spacer that is disposed in an accommodation space of the package and is fixed to the package; and
a physical quantity sensor unit that is fixed to the package via the spacer, wherein
when a direction in which the spacer and the physical quantity sensor unit overlap is set as a first direction and a direction orthogonal to the first direction is set as a second direction,
the physical quantity sensor unit includes
a support substrate provided with a first anchor and a second anchor that are disposed to be separated in the second direction,
a first movable portion fixed to the first anchor, and
a second movable portion fixed to the second anchor,
the spacer overlaps the first anchor and the second anchor in a plan view from the first direction, and
when a width of the physical quantity sensor unit in the second direction is set as Wx1 and a width of the spacer in the second direction is set as Wx2,
a relationship of 58% ≤ Wx2/Wx1 ≤ 88% is satisfied.

2. The physical quantity sensor according to claim 1, wherein
in a plan view from the first direction,
the first anchor is positioned at a central portion of the first movable portion, and
the second anchor is positioned at a central portion of the second movable portion.

3. The physical quantity sensor according to claim 1, further comprising:
a circuit element that is disposed in the accommodation space and to which an output signal from the physical quantity sensor unit is input, wherein
the circuit element is disposed between an inner bottom surface of the package and the spacer, and
the spacer is fixed to the package via the circuit element.

4. The physical quantity sensor according to claim 3, wherein
a relationship of 58% ≤ Wx2/Wx1 ≤ 83% is satisfied.

5. The physical quantity sensor according to claim 4, wherein
a relationship of 65% ≤ Wx2/Wx1 ≤ 75% is satisfied.

6. The physical quantity sensor according to claim 1, further comprising:
a circuit element that is disposed in the accommodation space and to which an output signal from the physical quantity sensor unit is input, wherein
the circuit element is positioned on a side opposite to the spacer with respect to the physical quantity sensor unit and is fixed to the physical quantity sensor unit.

7. The physical quantity sensor according to claim 6, wherein
a relationship of 67% ≤ Wx2/Wx1 ≤ 81% is satisfied.

8. The physical quantity sensor according to claim 1, wherein
when a direction orthogonal to the first direction and the second direction is set as a third direction,
the physical quantity sensor unit is a three-axis acceleration sensor unit configured to detect
an acceleration in the first direction based on a displacement of the first movable portion, and
accelerations in the second direction and the third direction based on a displacement of the second movable portion.

9. The physical quantity sensor according to claim 8, further comprising:
an angular velocity sensor element that is disposed in the accommodation space and detects an angular velocity around an axis along the first direction.
